# EUROPEAN PATENT SPECIFICATION

(11) **EP 2 274 193 B1**
(45) Date of publication and mention of the grant of the patent: **27.02.2013**
(21) Application number: 09742205.9
(22) Date of filing: 07.05.2009
(51) Int. Cl.: B62D 33/06, B62D 65/14

(54) **CONTROL CABIN AND METHOD OF MANUFACTURING THE SAME, AND MINING VEHICLE**
STEUERKABINE UND VERFAHREN ZU IHRER HERSTELLUNG SOWIE BERGBAUMASCHINE DAMIT
CABINE DE COMMANDE ET SON PROCÉDÉ DE FABRICATION, ET VÉHICULE D'EXPLOITATION MINIÈRE

(30) Priority: 09.05.2008 FI 20085434
(43) Date of publication of application: 19.01.2011
(73) Proprietor: Sandvik Mining and Construction Oy, 33330 Tampere (FI)
(72) Inventor: MIKKOLA, Jussi, 33330 Tampere (FI)
(74) Representative: Kuosmanen, Timo
(86) International application number: PCT/FI2009/050370
(87) International publication number: WO 2009/136005

(56) References cited:
- DD-A1- 110 815
- DE-A1- 19 813 474
- DE-A1-102007 022 654
- GB-A- 1 581 082
- JP-A- 2003 056 008
- JP-A- 2005 170 212
- JP-U- 2 018 776
- US-A- 4 055 230

## Description

### BACKGROUND OF THE INVENTION

The invention relates to a mining vehicle control cabin which is formed of a control cabin space and at least one inner module. The inner module is arranged as one piece in the control cabin space which forms a shell for protecting an operator. The invention further relates to a method of manufacturing a control cabin, and to a mining vehicle equipped with such a control cabin.

The fields of the invention are defined in closer detail in the preambles of the independent claims.

Mining vehicles, such as loading vehicles, dumpers, rock drilling rigs and the like, include a control cabin in which the controls of the vehicle are provided and which protects a driver of the vehicle e.g. against pieces of falling rock, dust, and noise. In addition, the control cabin protects the driver during collisions and in the event of a roll-over. JP-A-2003/056008 discloses a protective control cabin of a digging machine. Its disclosure forms the basis for the preamble features of claims 1. Typically, a control cabin is a separately manufactured module which, during the assembly of the mining vehicle, is fastened to a control cabin site provided on a carrier. Different vehicles require different control cabins, which causes high costs. Therefore, modular control cabins provided with a shell part and an inner part arranged therein have been developed. In the known solutions, the inner part of a modular control cabin is fastened to the shell part, and the shell part is by means of dampers fastened to the carrier of the vehicle. It has been noted that the known control cabins are inadequate in terms of manufacture and vibrodamping.

### BRIEF DESCRIPTION OF THE INVENTION

The main object of the invention is to provide a novel and improved mining vehicle control cabin, a method of manufacturing the same and, further, a mining vehicle equipped with such a control cabin.

A control cabin according to the invention is characterized in that the inner module comprises damping members which enable it to be engaged in place in the control cabin space with no rigid engagement with the surrounding structures.

A method according to the invention is characterized by pro-35 viding the inner module with damping members; and arranging the inner module in the control cabin space with no rigid engagement with the surrounding structures.

A mining vehicle according to the invention is characterized in that the inner module is arranged in the control cabin space and supported in place by means of damping members with no rigid engagement with the surrounding structures.

An idea of the invention is that the control cabin space constitutes a shell for protecting the operator. One or more inner modules are arranged in the control cabin space as one piece and supported in place by means of damping members such that they are not rigidly engaged with the protective shell or a protective structure defining the control cabin space, such as the carrier or a roll cage of the vehicle, nor with other surfaces or structures surrounding the control cabin space.

An advantage of the invention is that the relatively light-weight and small inner module can be isolated effectively from the vibration of the carrier by means of the damping members. Further, it is relatively easy and quick to replace the mere inner part e.g. in situations where the working environment of the operator is to be changed later or when the properties of the vehicle are changed and new control equipment is needed. The control cabin may thus be updated by replacing the inner module only. It is not usually necessary to update the control cabin space, i.e. the shell protecting the operator.

An idea of an embodiment is that the inner module has standard dimensions irrespective of the vehicle. The dimensioning of the control cabin space, in turn, is carried out vehicle-specifically, taking the space reserved for the control cabin site into account. This enables the control cabin space to be designed taking aspects associated with the use, service and appearance of each vehicle into account. In addition, the structure of the roll cage or a corresponding safety structure may be designed taking into account the layout of the carrier, the components and devices provided on the carrier as well as the support points to which the roll cage may be fastened in a reliable manner. The inner module, in turn, may be of a standard component type so that it is also suitable for use in vehicles different from one another. It is for instance possible to manufacture an inner module which may be installed in a rock drilling rig, loading vehicle, transport vehicle or in any other mining vehicle. The physical structure of the inner module may thus be constant, and it will suffice that the controls are adjusted or programmed as required by each vehicle.

An idea of an embodiment is that the control cabin comprises at least two inner modules. It is possible to arrange at least one first inner module and one or more second inner modules inside the large control cabin space. The first inner module comprises at least a frame, an operator support, such as a seat, and at least one set of controls. The second inner module may comprise a frame, another set of controls, and a display device. In some cases, it may be easier to install more than one inner module than only one large module.

An idea of an embodiment is that the inner module is engaged directly with the carrier of the vehicle by means of the damping members. In such a case, the damping members are arranged between the frame of the inner module and the carrier.

An idea of an embodiment is that the inner module has no physical contact whatsoever with the surfaces of the control cabin space, the support structures or the like.

An idea of an embodiment is that the inner module is engaged with the surfaces of the control cabin space, the support structures or the like by means of the damping members.

An idea of an embodiment is that the roof of the control cabin space may be opened and closed, enabling the inner module to be installed as one piece into its place in the control cabin space through the open upper part of the control cabin space and, correspondingly, to be lifted as one piece out of the control cabin space.

An idea of an embodiment is that one side wall of the control cabin space may be opened and closed or, alternatively, a door provided in the control cabin space is dimensioned to be sufficiently large so as to enable the inner module to be installed as one piece into its place in the control cabin space through a lateral opening and, correspondingly, to be removed as one piece out of the control cabin space by a lateral movement.

An idea of an embodiment is that the inner module comprises, at a predetermined position, a coupling point for all connections of the control cabin. In such a case, the electric, pressure medium and data connections to be supplied to the control cabin are collected in one standard place in the inner module. Similarly, the control cabin space is provided with a second coupling point at the same location, whereby when the inner module is arranged in the control cabin space, the coupling points settle close to one another, so that they are easy to interconnect by suitable connecting leads or corresponding connecting members. This embodiment makes the modules easier to design and assemble. In addition, it makes an inner module simpler to replace by a new one, if necessary, when the connections are located at a predetermined coupling point. The coupling points may be provided with suitable quick coupling members, which makes the inner module even quicker to install and replace later, if necessary.

An idea of an embodiment is that the inner module comprises at least one display device.

An idea of an embodiment is that the control cabin space comprises at least one control panel.

An idea of an embodiment is that the control cabin space is formed as an integrated part of the frame structure of the carrier of the vehicle. On two oppsite sides, the control cabin space may be defined by side plates which belong to the carrier and which may be dimensioned to extend higher in the vertical direction at the control cabin than at other sections. In such a case, the side plates constitute a safety structure to protect the operator.

An idea of an embodiment is that the control cabin comprises a shell module inside which one or more inner modules are arranged. The shell module is pre-assembled and it is by means of fastening members fastened rigidly to the carrier of the vehicle such that the safety structure of the shell module is capable of receiving vertical loads required of a roll cage. The shell module thus forms a control cabin space into which the inner module is arranged as one piece.

### BRIEF DESCRIPTION OF THE FIGURES

Some embodiments of the invention are described in closer detail in the accompanying drawings, in which
Figure 1 is a schematic side view showing a rock drilling rig,
Figure 2 is a schematic side view showing a transport vehicle,
Figure 3 is a schematic side view showing an inner module of a control cabin according to the invention,
Figure 4 is a schematic side view showing a shell module of a control cabin according to the invention,
Figure 5 is a schematic side view showing a control cabin according to the invention, assembled by arranging an inner module inside a shell module,
Figure 6 schematically shows another control cabin whose shape follows dimensions and shapes of a control cabin site provided on a carrier, as seen in a travel direction of a vehicle,
Figure 7 is a schematic top view showing still another control cabin comprising two inner modules in a space defined by a shell module,
Figure 8 is a schematic side view showing a principle of an active-damped inner module,
Figure 9 is a schematic side view showing a part of a mining vehicle wherein a control cabin space is provided directly in a frame structure of a carrier, and
Figure 10 is a schematic top view showing the control cabin structure according to Figure 9 in a highly simplified manner.

For the sake of clarity, the figures show some embodiments of the invention in a simplified manner. Like reference numbers identify like elements.

### DETAILED DESCRIPTION OF THE INVENTION

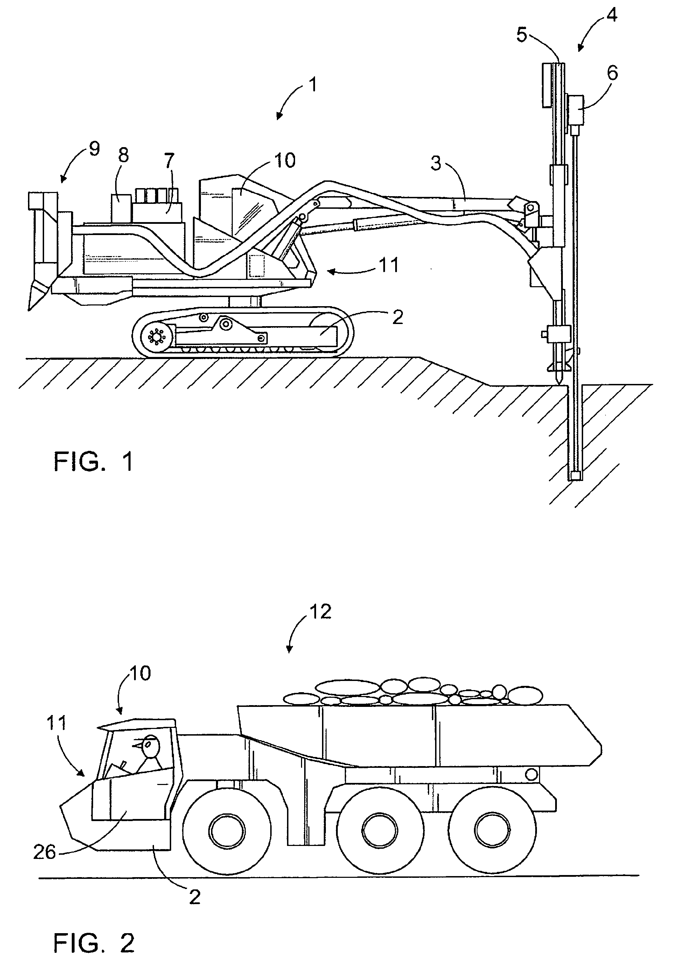

Figure 1 shows a rock drilling rig 1 comprising a movable carrier 2 with one or more booms 3 arranged therein. The boom 3 is provided with a drilling unit 4 which comprises a feed beam 5 which supports a rock drill machine 6 while it is moved. The carrier 2 carries a motor 7, a hydraulic pump 8, a flushing and dust collecting system 9 as well as a control cabin 10 necessitated by the rock drilling rig 1. A control cabin site 11 is reserved on the carrier 2 for receiving the control cabin 10. The control cabin 10 consists of a control cabin space and at least one separately manufactured module, as will be shown in greater detail later in this application. The rock drilling rig 1 is an example of a mining vehicle referred to in the present application.

Figure 2 shows a transport vehicle 12, i.e. a dumper, which is another example of a mining vehicle. The transport vehicle 12 also comprises a movable carrier 2 provided with a control cabin site 11 wherein a modular control cabin 10 according to the invention is arranged. As can be seen by comparing Figures 1 and 2, the appearance and dimensions of the control cabin 10 may differ greatly. According to the idea of the invention, however, it is possible to use even identical inner modules in mining vehicles different from one another. A shell module of the control cabin 10 or another structure forming the control cabin space may be provided taking e.g. the available space, i.e. the shape and dimensions of the control cabin site, the protection needs of the control cabin as well as the esthetic aspects into account. Yet another mining vehicle is a loading vehicle whose movable carrier is equipped with a loading bucket.

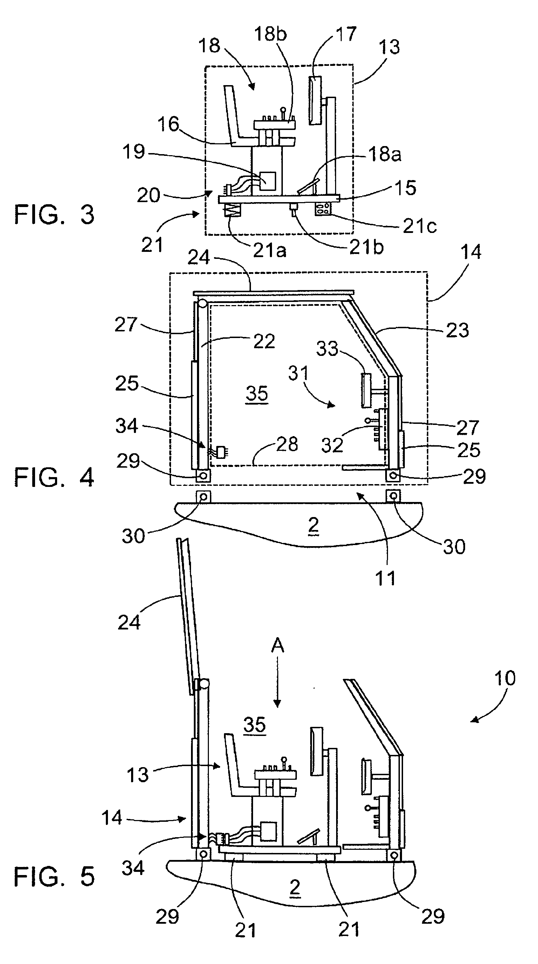

Figure 3 shows an inner module 13 which may be pre-assembled in a separate stage so that it may be installed as one entity in its place inside a shell module 14, as can be seen in Figure 5. The inner module 13 comprises a frame 15, which may be e.g. a plate-like piece to which components belonging to the inner module may be fastened. In the embodiment shown in the figure, the frame 15 is a bottom plate having a seat 16 supported against the upper surface side thereof. The inner module 13 may further comprise a display device 17, which may be supported by suitable support members against the frame 15 or structures of the seat 16. Instead of a seat, the inner module may comprise another operator support. The inner module 13 may still further comprise controls 18, such as one or more pedals 18a, a pointing device 18b, such as a joystick, trackball mouse, keypad or the like. The pointing device 18b and various switches may be arranged in one or more arm rests or a corresponding panel so that they are ergonomically available to the operator. The inner module 13 may still further comprise one or more control units 19 which may comprise a computer or a corresponding control device. The inner module 13 may be provided with a coupling point 20 whose location may be standard in all modules of the control cabin. The coupling point 20 is equipped with coupling members by means of which the controls 18, the control unit 19, the display device of the inner module 13 as well as possible other instruments contained in the inner unit are connectable with the electric, pressure medium and data transfer lines of the carrier.

The inner module 13 comprises no roll cage or the like but is a light-weight and easily installable inner part which has a considerable influence on the working environment and ergonomics of the operator as well as on the functionality of the control cabin.

The inner module 13 is equipped with one or more damping members 21 which enable it to be supported in place against the structures defining the control cabin space in a shock and vibration damping manner. The damping member 21 may comprise a mechanical spring 21 a, or it may be a pressure medium operated spring member 21 b. Further, a spring member 21 c based on an elastic material may be used. In addition to a flexible structure, the damping members 21 may also comprise return motion damping. The type and number of damping members 21 may be selected as necessary. One or more damping members may be arranged to support the inner module higher in the vertical direction, which enables a better stability to be achieved.

The shell module 14 shown in Figure 4 comprises a roll cage 22, which may be formed of tubular beams or the like or, alternatively, the roll cage is formed of sufficiently strong wall panels. In the present application, a roll cage 22 generally refers to a structure which protects the operator in the event of an accident. Typically, a roll cage has to be strong enough to withstand a roll-over of the vehicle, i.e. it has to be a ROPS (Roll Over Protective Structure) protected structure. For the sake of clarity, the figures show the roll cage 22 in a highly simplified manner. The shell module 14 also forms the visible outer and inner surfaces of the control cabin 10. Thus, the shell module 14 may be provided with a window 23, a roof 24, side panels 25, and at least one door 26, which can be seen in Figure 2. Some of the side panels 25 may be windows 27. The roof 24 may be fastened detachably or it may be hinged by its one edge so that it may be opened in a manner shown in Figure 5 to enable the inner module 13 to be installed. Alternatively, a side panel forming one side of the shell module 14 may be arranged easily detachably, or it may be hinged so that it may be opened easily, in which case the inner module 13 may be installed inside the shell module 14 in a lateral direction. An openable side panel is illustrated in dashed line 28 in Figure 4.

The shell module 14 may comprise fastening flanges 29, fastening loops or corresponding fastening members by means of which it may be reliably fastened to the control cabin site 11, which may also be equipped with corresponding fastening members 30, provided on the carrier 2. The fastening members 29, 30 may be interconnected by a bolt joint, a fastening pin or some suitable quick-fastening device. Alternatively, the shell module 14 is fastened to the carrier 2 by welding. The shell module 14 is fastened to the carrier 2 by using a strong physical joint.

The shell module 14 may be equipped with one or more control panels 31, which may include switches, control devices 32, gauges, and a display device 33. The control panel 31 may be provided with vehicle-specific equipment and controls while the inner module 13 comprises standard controls and control devices. Further, the shell module 14 may have a coupling point 34 in a manner similar to that in connection with the inner module 13.

Figure 5 illustrates installation of the inner module 13 into a space 35 defined by the shell module 14. The roof 24 may be opened with respect to hinging or it may be detached completely for the duration of the installation of the inner module 13. In this case, installation direction A is vertical. The damping members 21 of the inner module 13 may be supported directly against the control cabin site on the carrier 2 since the shell module 14 has no floor at the inner module 13. After the inner module 13 has been supported in place, the couplings of electric, data and pressure medium lines may be carried out at the coupling points 20, 34.

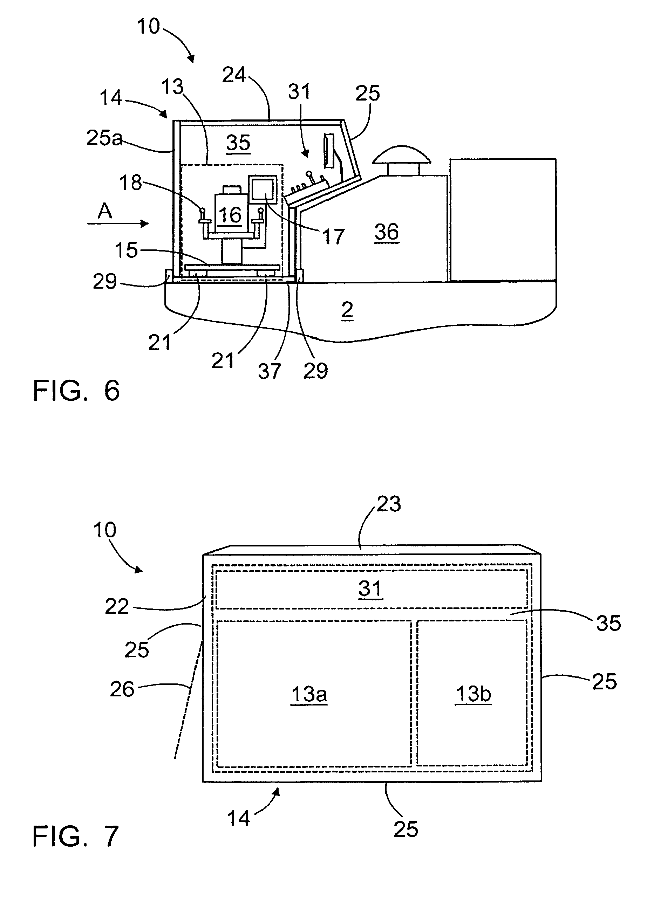

Figure 6 shows another control cabin 10 whose shell module 14 differs from the embodiment shown in Figures 4 and 5. In Figure 6, the shape of the shell module 14 is influenced by the shapes of components 36 surrounding the control cabin site 11. In the embodiment of Figure 6, the shell module 14 comprises a floor 37, in which case the inner module 13 is supported against the floor 37 by means of the damping members 21. In this embodiment, installation direction A is horizontal. The door in the shell module 14 may be dimensioned such that the inner module 13 may be arranged through the door into the control cabin space 35 defined by the shell module 14. Alternatively, a side panel 25a may be opened for installation.

Figure 7 is a top view showing a control cabin 10 wherein two inner modules 13a, 13b have been arranged in the control cabin space 35 defined by the shell module 14. At least a first inner module 13a comprises a seat and controls, as shown in the previous figures. A second inner module 13b may also comprise a seat and necessary controls or, alternatively, the second inner module may only comprise additional controls, an additional control panel, and an additional display. In the embodiment shown in the figure, the shell element 14 is formed of side panels 25 and a roof that are strong enough to provide a sufficient roll cage 22 against accidents.

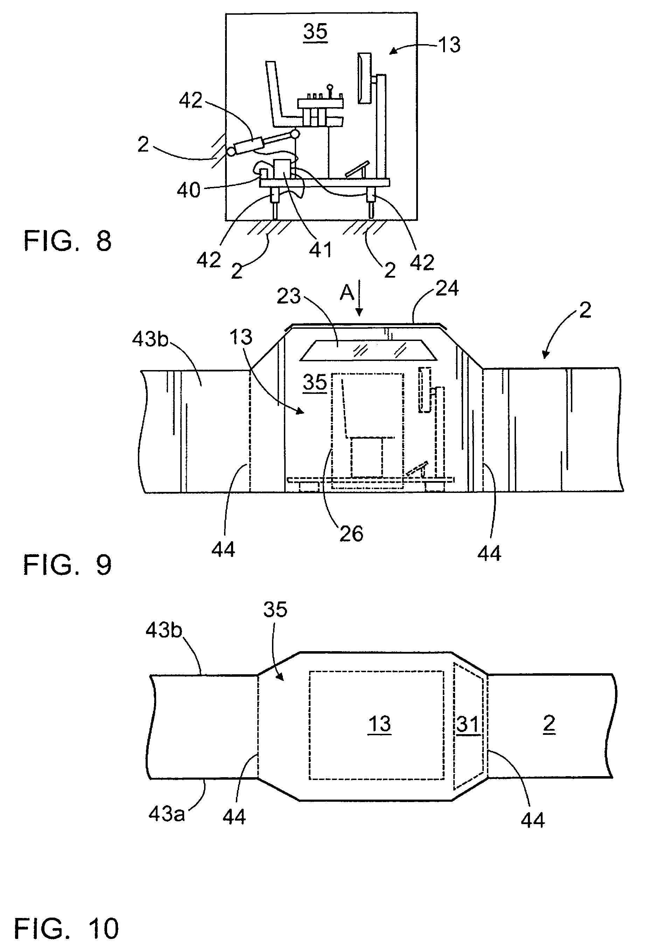

Figure 8 shows an inner module 13 equipped with an active damping system. The system comprises one or more sensors 40 for identifying movements of the inner module 13 and/or the carrier 2 of the vehicle. The sensor 40 may be e.g. an acceleration sensor which very quickly detects if the vehicle is driven e.g. onto an inclined surface, into a pit or to another point causing inclination or vibration. A control unit 41 included in the damping system is provided with a control strategy according to which it controls one or more active damping elements 42 to generate a necessary counter-movement in order to damp the inclination or vibration detected by the sensor 40. The active damping element 42 may be e.g. a pressure medium cylinder. As can be seen in the figure, at least one damping element may be supported against the structure of the inner module higher in the vertical direction, which enables stability to be achieved more easily.

Figures 9 and 10 show a control cabin which is different from the previous constructions and which comprises no separate shell module but the control cabin space 35 is formed directly in the structure of the carrier 2. The frame structure of the carrier 2 may comprise two mutually space-apart side plates 43a, 43b between which the control cabin space 35 is provided. If the carrier 2 is particularly narrow, it is possible to arrange the side plates 43a, 43b more widely spaced apart at the control cabin than at other sections. Further, the side plates 43a, 43b may be dimensioned to extend a greater distance upwards in the vertical direction at the control cabin, in which case the side plates 43a, 43b constitute the necessary roll cage. The control cabin space 35 may also be defined by transverse walls 44 or corresponding support structures between the side plates 43a, 43b. Further, the shell of the control cabin space 35 may comprise an openable and closable roof 24 through which the inner module 13 may be arranged in the control cabin space 35. The shell of the control cabin space 35 may further comprise the necessary other shell panels, a window 23, and a door 26. The control cabin space 35 may be provided with a fixed control panel 31 which may be equipped with the basic gauges and controls of the vehicle. The devices, gauges, displays, controls and other equipment which are possibly to be updated later and which influence the working environment of the operator may be arranged in the replaceable inner module 13.

In some cases, the features disclosed in the present application may be used as such, irrespective of other features. On the other hand, when necessary, the features set forth in the present application may be combined so as to provide different combinations.

The drawings and the related description are only intended to illustrate the idea of the invention. The details of the invention may vary within the scope of the claims.

## Claims

1. A mining vehicle control cabin, comprising
a control cabin space (35) defined by surfaces arranged to form a protective shell surrounding an operator; and
at least one inner module (13), which is arranged in the control cabin space (35), and which comprises damping members (21) by means of which it is engaged in place in the control cabin space (35) with no rigid engagement with the surrounding structures,
**characterized in that**
the inner module (13) is one pre-assembled piece,
the inner module (13) is arranged as one piece in the control cabin space (35),
the inner module (13) comprises a first coupling point (20) and the control cabin space (35) comprises a second coupling point (34) for all electric and pressure medium connections of the control cabin (10),
the first coupling point (20) and the second coupling point (34) are arranged close to one another,
and wherein at least one shell part of the control cabin space (35) is openable and closable, whereby the inner module (13) is installable as one piece in its place in the control cabin space (35) and, correspondingly, removable as one piece out of the control cabin space (35).

2. A control cabin as claimed in claim 1, **characterized in that**
the control cabin space (35) is an integral part of the structure of a carrier (2) of the vehicle.

3. A control cabin as claimed in claim 2, **characterized in that**
the control cabin space (35) is defined on at least two sides by side plates (43a, 43b) included in a frame structure of the carrier (2) of the vehicle, the side plates (43a, 43b) also forming a roll cage of the control cabin (10).

4. A control cabin as claimed in claim 1, **characterized in that**
the control cabin (10) comprises a shell module (14) which is pre-assembled and separate from the carrier (2) of the vehicle,
the shell module (14) encases the control cabin space (35), and
the shell module (14) comprises fastening members (29) for fastening it rigidly to the carrier (2) of the vehicle.

5. A control cabin as claimed in claim 4, **characterized in that**
the shell module (14) comprises at least a roll cage (22), side panels (25), a door (26), a window (23), and a roof (24).

6. A control cabin as claimed in any one of the preceding claims, **characterized in that**
the inner module (13) comprises at least one frame part (15), an operator support (16), and at least one set of controls (18).

7. A control cabin as claimed in any one of the preceding claims, **characterized in that**
the inner module (13) has standard dimensions irrespective of vehicle, and
the dimensions of the control cabin space (35) mainly depend on the vehicle.

8. A control cabin as claimed in any one of the preceding claims, **characterized in that**
the control cabin space (35) is provided with at least two inner modules (13a, 13b).

9. A control cabin as claimed in any one of the preceding claims, **characterized in that**
the inner module (13) is engaged directly with the carrier (2) of the vehicle by means of the damping members (21).

10. A control cabin as claimed in any one of preceding claims 4 to 9, **characterized in that**
the inner module (13) is engaged with the shell module (14) by means of the damping means (21).

11. A control cabin as claimed in any one of the preceding claims, **characterized in that**
the control cabin space (35) comprises at least one control panel (31).

12. A control cabin as claimed in any one of the preceding claims, **characterized in that**
the inner module (13) is provided with an active damping system comprising: at least one sensor (40) for identifying movements of the inner module (13) or the carrier (2) of the vehicle, a damping system control unit (41), and at least one active damping element (42), and
the damping system control unit (41) is arranged to control the at least one damping element (42) and damp the movements of the inner module (13) actively on the basis of information received from the sensor (40).

13. A method of manufacturing a mining vehicle control cabin, the method comprising
forming at least one inner module (13),
forming a control cabin space (35) which comprises a protective shell constituting the outer surfaces of the control cabin (10),
providing the inner module (13) with damping members (21), and supporting the inner module (13) by means of the damping members (21) to the control cabin space (35) with no rigid engagement with the surrounding structures,
**characterized by**
pre-assembling the inner module (13) separately relative to the control cabin space (35),
arranging the inner module (13) as one piece in the control cabin space (35) from one installation direction (A) through an openable and closable portion of the protective shell,
providing the inner module (13) with a first coupling point (20) and the control cabin space (35) with a second coupling point (34) for all electric and pressure medium connections of the control cabin (10),
arranging the first coupling point (20) and the second coupling point (34) close to one another, and
connecting the first coupling point (20) and the second coupling point (34) to another.

14. A method as claimed in claim 13, **characterized by**
forming the control cabin (10) of at least two pre-assembled modules, namely a shell module (14) and the inner module (13),
forming the control cabin space (35) on the basis of available space and shape of a control cabin site (11) provided on a carrier (2),
equipping the shell module (14) with at least a roll cage (22) and an outer shell constituting the outer surfaces of the control cabin (10),
equipping the shell module (14) further with fastening members (29) and fastening the shell module (14) rigidly to the carrier (2) of the vehicle, and
equipping at least one inner module (13) with at least one frame part (15), operator support (16) and at least one set of controls (18).

15. A method as claimed in claim 13, **characterized by**
forming the control cabin space (35) in the fixed frame structure of the carrier (2) of the vehicle.

16. A mining vehicle comprising
a movable carrier (2),
at least one mining device (4),
a control cabin (10) arranged on the carrier (2) in a control cabin site (11) assigned to the control cabin (10), and wherein
the control cabin (10) comprises at least one inner module (13) and a control cabin space (35), and
the inner module (13) is supported in place in the control cabin space (35) by means of damping members (21) with no rigid engagement with the surrounding structures,
**characterized in that**
the inner module (13) is a pre-assembled piece which is arranged as one piece in the control cabin space,
the control cabin space is provided with a protective shell having at least one openable and closable portion through which the inner module is installed in its place,
the inner module (13) comprises a first coupling point (20) and the control cabin space (35) comprises a second coupling point (34) for all electric and pressure medium connections of the control cabin (10), and
the first coupling point (20) and the second coupling point (34) are arranged close to one another.

## Patentansprüche

1. Eine Steuerkabine für ein Bergbaufahrzeug, die Folgendes aufweist:
einen Steuerkabinenraum (35), der durch Flächen definiert wird, die angeordnet sind, eine den Bediener umgebende Schutzschale zu bilden; und
mindestens ein inneres Modul (13), das in dem Steuerkabinenraum (35) angeordnet ist und das Dämpfungsglieder (21) aufweist, mit Hilfe welcher es an seinem Platz in dem Steuerkabinenraum (35) ohne rigide Verbindung mit den umgebenden Strukturen arretiert wird,
**dadurch gekennzeichnet, dass**
das innere Modul (13) ein im Voraus zusammengesetztes Stück ist,
das innere Modul (13) als ein Stück in dem Steuerkabinenraum (35) angeordnet ist,
das innere Modul (13) einen ersten Kopplungspunkt (20) und der Steuerkabinenraum (35) einen zweiten Kopplungspunkt (34) für alle elektrischen Verbindungen und Verbindungen für Druckmedium der Steuerkabine (10) aufweist,
der erste Kopplungspunkt (20) und der zweite Kopplungspunkt (34) nahe an einander angeordnet sind,
und wobei mindestens ein Schalenteil des Steuerkabinenraums (35) zu öffnen und zu schließen ist, wodurch das innere Modul (13) als ein Stück an seinen Platz in dem Steuerkabinenraum (35) installiert werden kann, und entsprechend als ein Stück aus dem Steuerkabinenraum (35) entfernt werden kann.

2. Eine Steuerkabine gemäß dem Patentanspruch 1, **dadurch gekennzeichnet, dass** der Steuerkabinenraum (35) ein integraler Teil der Struktur eines Trägers (2) des Fahrzeugs ist.

3. Eine Steuerkabine gemäß dem Patentanspruch 2, **dadurch gekennzeichnet, dass** der Steuerkabinenraum (35) an mindestens zwei Seiten durch Seitenplatten (43a, 43b) definiert wird, die in einer Rahmenstruktur des Trägers (2) des Fahrzeugs eingeschlossen sind, wobei die Seitenplatten (43a, 43b) auch einen Überrollkäfig der Steuerkabine (10) bilden.

4. Eine Steuerkabine gemäß dem Patentanspruch 1, **dadurch gekennzeichnet, dass** die Steuerkabine (10) ein Schalenmodul (14) aufweist, welches im Voraus zusammengesetzt ist und separat von dem Träger (2) des Fahrzeugs ist,
das Schalenmodul (14) den Steuerkabinenraum (35) umgibt, und
das Schalenmodul (14) Befestigungsglieder (29) zu seiner rigiden Befestigung an dem Träger (2) des Fahrzeugs aufweist.

5. Eine Steuerkabine gemäß dem Patentanspruch 4, **dadurch gekennzeichnet, dass** das Schalenmodul (14) mindestens einen Überrollkäfig (22), Seitenpaneele (25), eine Tür (26), ein Fenster (23) und ein Dach (24) aufweist.

6. Eine Steuerkabine gemäß einem der vorhergehenden Patentansprüche, **dadurch gekennzeichnet, dass** das innere Modul (13) mindestens einen Rahmenteil (15), eine Stütze für den Bediener (16) und mindestens einen Satz von Steuergeräten (18) aufweist.

7. Eine Steuerkabine gemäß einem der vorhergehenden Patentansprüche, **dadurch gekennzeichnet, dass**
das innere Modul (13) fahrzeugunabhängige Standardausmaße aufweist, und
die Ausmaße des Steuerkabinenraums (35) in erster Linie von dem Fahrzeug abhängig sind.

8. Eine Steuerkabine gemäß einem der vorhergehenden Patentansprüche, **dadurch gekennzeichnet, dass** der Steuerkabinenraum (35) mit mindestens zwei inneren Modulen (13a, 13b) versehen ist.

9. Eine Steuerkabine gemäß einem der vorhergehenden Patentansprüche, **dadurch gekennzeichnet, dass** das innere Modul (13) direkt mit dem Träger (2) des Fahrzeugs mit Hilfe der Dämpfungsglieder (21) verbunden ist.

10. Eine Steuerkabine gemäß einem der vorhergehenden Patentansprüche 4 bis 9, **dadurch gekennzeichnet, dass** das innere Modul (13) mit dem Schalenmodul (14) mit Hilfe der Dämpfungsmittel (21) verbunden ist.

11. Eine Steuerkabine gemäß einem der vorhergehenden Patentansprüche, **dadurch gekennzeichnet, dass** der Steuerkabinenraum (35) mindestens ein Steuerpult (31) aufweist.

12. Eine Steuerkabine gemäß einem der vorhergehenden Patentansprüche, **dadurch gekennzeichnet, dass**
das innere Modul (13) mit einem aktiven Dämpfungssystem versehen ist, das Folgendes aufweist: mindestens einen Sensor (40) zum Identifizieren von Bewegungen des inneren Moduls (13) oder des Trägers (2) des Fahrzeugs, eine Kontrolleinheit des Dämpfungssystems (41), und mindestens ein aktives Dämpfungselement (42), und
die Kontrolleinheit des Dämpfungssystems (41) angeordnet ist, das mindestens eine Dämpfungselement (42) zu steuern und die Bewegungen des inneren Moduls (13) auf der Basis der von dem Sensor (40) erhaltenen Information aktiv zu dämpfen.

13. Ein Verfahren zur Herstellung einer Steuerkabine für ein Bergbaufahrzeug, wobei das Verfahren Folgendes aufweist
mindestens ein inneres Modul (13) bilden,
einen Steuerkabinenraum (35) bilden, der eine schützende Schale aufweist, die die äußeren Flächen der Steuerkabine (10) ausmachen,
das innere Modul (13) mit Dämpfungsgliedern (21) versehen, und
das innere Modul (13) mit Hilfe der Dämpfungsglieder (21) an dem Steuerkabinenraum (35) ohne rigide Verbindung mit den umgebenden Strukturen aufstützen,
**dadurch gekennzeichnet, dass**
das innere Modul (13) separat in Bezug auf den Steuerkabinenraum (35) im Voraus zusammengesetzt wird,
das innere Modul (13) separat als ein Stück in dem Steuerkabinenraum (35) aus einer Installationsrichtung (A) durch einen zu öffnenden und zu schließenden Abschnitt der schützenden Schale angeordnet wird,
das innere Modul (13) mit einem ersten Kopplungspunkt (20) und der Steuerkabinenraum (35) mit einem zweiten Kopplungspunkt (34) für alle elektrischen Verbindungen und Verbindungen für Druckmedium der Steuerkabine (10) versehen werden,
der erste Kopplungspunkt (20) und der zweite Kopplungspunkt (34) nahe an einander angeordnet werden, und
der erste Kopplungspunkt (20) und der zweite Kopplungspunkt (34) miteinander verbunden werden.

14. Ein Verfahren gemäß dem Patentanspruch 13, **dadurch gekennzeichnet, dass**
die Steuerkabine (10) aus mindestens zwei im Voraus zusammengesetzten Modulen gebildet wird, nämlich einem Schalenmodul (14) und dem inneren Modul (13),
der Steuerkabinenraum (35) auf der Basis von vorhandenem Raum und vorhandener Form eines auf dem Träger (2) zur Verfügung stehenden Steuerkabinenplatzes (11) gebildet wird,
das Schalenmodul (14) mit mindestens einem Überrollkäfig (22) und einer äußeren Schale versehen wird, die die äußeren Flächen der Steuerkabine (10) ausmachen,
das Schalenmodul (14) weiter mit Befestigungsgliedern (29) versehen wird und das Schalenmodul (14) rigide an dem Träger (2) des Fahrzeugs befestigt wird, und
mindestens ein inneres Modul (13) mit mindestens einem Rahmenteil (15), einer Stütze für den Bediener (16) und mindestens einem Satz von Steuergeräten (18) versehen wird.

15. Ein Verfahren gemäß dem Patentanspruch 13, **dadurch gekennzeichnet, dass** der Steuerkabinenraum (35) in der festen Rahmenstruktur des Trägers (2) des Fahrzeugs gebildet wird.

16. Ein Bergbaufahrzeug, das Folgendes aufweist
einen beweglichen Träger (2),
mindestens eine Bergbauvorrichtung (4),
eine, auf dem Träger (2) an einem, für die Steuerkabine (10) bestimmten Steuerkabinenplatz (11) angeordnete Steuerkabine (10), und wobei
der Steuerkabinenraum (10) mindestens ein inneres Modul (13) und einen Steuerkabinenraum (35) aufweist, und
das innere Modul (13) mit Hilfe von Dämpfungsgliedern (21) an seinem Platz in dem Steuerkabinenraum (35) ohne rigide Verbindung mit den umgebenden Strukturen arretiert wird,
**dadurch gekennzeichnet, dass**
das innere Modul (13) ein im Voraus zusammengesetztes Stück ist, das als ein Stück in dem Steuerkabinenraum angeordnet ist,
der Steuerkabinenraum mit einer schützenden Schale mit mindestens einem zu öffnenden und zu schließenden Teil versehen ist, durch welches das innere Modul auf seinen Platz installiert wird,
das innere Modul (13) einen ersten Kopplungspunkt (20) und der Steuerkabinenraum (35) einen zweiten Kopplungspunkt (34) für alle elektrischen Verbindungen und Verbindungen für Druckmedium der Steuerkabine (10) aufweist, und
der erste Kopplungspunkt (20) und der zweite Kopplungspunkt (34) nahe an einander angeordnet sind.

## Revendications

1. Cabine de commande d'un véhicule d'exploitation minière, comprenant
un espace de cabine de commande (35) défini par des surfaces agencées de façon à former une enveloppe de protection qui entoure un conducteur ; et
au moins un module intérieur (13), qui est agencé dans l'espace de cabine de commande (35), et qui comprend des éléments d'amortissement (21) au moyen desquels il est mis en prise en place dans l'espace de cabine de commande (35) sans mise en prise rigide avec les structures environnantes ;
**caractérisée en ce que**
le module intérieur (13) est un élément préassemblé ;
le module intérieur (13) est agencé d'un seul tenant dans l'espace de cabine de commande (35) ;
le module intérieur (13) comprend un premier point d'accouplement (20) et l'espace de cabine de commande (35) comprend un second point d'accouplement (34) pour toutes les connexions des moyens électriques et de pression de la cabine de commande (10) ;
le premier point d'accouplement (20) et le second point d'accouplement (34) sont agencés à proximité l'un de l'autre ;
et dans laquelle au moins une partie d'enveloppe de l'espace de cabine de commande (35) peut être ouverte et fermée, grâce à quoi le module intérieur (13) peut être installé d'un seul tenant à sa place dans l'espace de cabine de commande (35) et, réciproquement, il peut être retiré d'un seul tenant hors de l'espace de cabine de commande (35).

2. Cabine de commande selon la revendication 1, **caractérisée en ce que**
l'espace de cabine de commande (35) fait partie intégrante de la structure de châssis (2) du véhicule.

3. Cabine de commande selon la revendication 2, **caractérisée en ce que**
l'espace de cabine de commande (35) est défini sur au moins deux côtés par des plaques latérales (43a, 43b) incluses dans une structure de bâti du châssis (2) du véhicule, les plaques latérales (43a, 43b) formant également une cage de retournement de la cabine de commande (10).

4. Cabine de commande selon la revendication 1, **caractérisée en ce que**
la cabine de commande (10) comprend un module d'enveloppe (14) qui est préassemblé et séparé du châssis (2) du véhicule ;
le module d'enveloppe (14) englobe l'espace de cabine de commande (35) ; et
le module d'enveloppe (14) comprend des éléments de fixation (29) destinés à le fixer de manière rigide au châssis (2) du véhicule.

5. Cabine de commande selon la revendication 4, **caractérisée en ce que**
le module d'enveloppe (14) comprend au moins une cage de retournement (22), des panneaux latéraux (25), une porte (26), une fenêtre (23), et un toit (24).

6. Cabine de commande selon l'une quelconque des revendications précédentes, **caractérisée en ce que**
le module intérieur (13) comprend au moins une partie de bâti (15), un support de conducteur (16), et au moins un ensemble de commandes (18).

7. Cabine de commande selon l'une quelconque des revendications précédentes, **caractérisée en ce que**
le module intérieur (13) présente des dimensions normalisées indépendantes du véhicule ; et
les dimensions de l'espace de cabine de commande (35) dépendent principalement du véhicule.

8. Cabine de commande selon l'une quelconque des revendications précédentes, **caractérisée en ce que**
l'espace de cabine de commande (35) est doté d'au moins deux modules intérieurs (13a, 13b).

9. Cabine de commande selon l'une quelconque des revendications précédentes, **caractérisée en ce que**
le module intérieur (13) est mis en prise directement avec le châssis (2) du véhicule au moyen des éléments d'amortissement (21).

10. Cabine de commande selon l'une quelconque des revendications précédentes 4 à 9, **caractérisée en ce que**
le module intérieur (13) est mis en prise avec le module d'enveloppe (14) au moyen des éléments d'amortissement (21).

11. Cabine de commande selon l'une quelconque des revendications précédentes, **caractérisée en ce que**
l'espace de cabine de commande (35) comprend au moins un panneau de commande (31).

12. Cabine de commande selon l'une quelconque des revendications précédentes, **caractérisée en ce que**
le module intérieur (13) est doté d'un système d'amortissement actif qui comprend : au moins un capteur (40) pour identifier des déplacements du module intérieur (13) ou du châssis (2) du véhicule, une unité de commande du système d'amortissement (41) et au moins une élément d'amortissement actif (42) ; et
l'unité de commande du système d'amortissement (41) est agencée de façon à commander le au moins un élément d'amortissement (42) et à amortir les déplacements du module intérieur (13) de manière active sur la base d'informations reçues en provenance du capteur (40).

13. Procédé de fabrication d'une cabine de commande d'un véhicule d'exploitation minière, le procédé comprenant
la formation d'au moins un module intérieur (13) ;
la formation d'un espace de cabine de commande (35) qui comprend une enveloppe de protection constituant les surfaces extérieures de la cabine de commande (10) ;
la fourniture au module intérieur (13) d'éléments d'amortissement (21) ; et
le fait de supporter le module intérieur (13) au moyen des éléments d'amortissement (21) dans l'espace de cabine de commande (35) sans mise en prise rigide avec les structures environnantes ;
**caractérisé par**
le préassemblage du module intérieur (13) séparément par rapport à l'espace de cabine de commande (35) ;
l'agencement du module intérieur (13) d'un seul tenant dans l'espace de cabine de commande (35) à partir d'une direction d'installation (A) à travers une partie pouvant être ouverte et fermée de l'enveloppe de protection ;
la fourniture au module intérieur (13) d'un premier point d'accouplement (20) et la fourniture à l'espace de cabine de commande (35) d'un second point d'accouplement (34) pour toutes les connexions des moyens électriques et de pression de la cabine de commande (10) ;
l'agencement du premier point d'accouplement (20) et du second point d'accouplement (34) à proximité l'un de l'autre ; et
la connexion du premier point d'accouplement (20) et du second point d'accouplement (34) l'un à l'autre.

14. Procédé selon la revendication 13, **caractérisé par**
la formation de la cabine de contrôle (10) d'au moins deux modules préassemblés, à savoir un module d'enveloppe (14) et le module intérieur (13) ;
la formation de l'espace de cabine de commande (35) sur la base de l'espace disponible et de la forme d'un emplacement de cabine de commande (11) disposé sur un châssis (2) ;
le fait d'équiper le module d'enveloppe (14) avec au moins une cage de retournement (22) et avec une enveloppe extérieure constituant les surfaces extérieures de la cabine de commande (10) ;
le fait d'équiper en outre le module d'enveloppe (14) avec des éléments de fixation (29) et de fixer le module d'enveloppe (14) de manière rigide au châssis (2) du véhicule ; et
le fait d'équiper au moins un module intérieur (13) avec au moins une partie de bâti (15), un support de conducteur (16) et au moins un ensemble de commandes (18).

15. Procédé selon la revendication 13, **caractérisé par**
la formation de l'espace de cabine de commande (35) dans la structure de bâti fixe du châssis (2) du véhicule.

16. Véhicule d'exploitation minière comprenant
un châssis mobile (2) ;
au moins un dispositif d'exploitation minière (4) ;
une cabine de commande (10) agencée sur le châssis (2) à un emplacement de cabine de commande (11) attribué à la cabine de commande (10); et dans lequel
la cabine de commande (10) comprend au moins un module intérieur (13) et un espace de cabine de commande (35) ; et
le module intérieur (13) est supporté en place dans l'espace de cabine de commande (35) au moyen d'éléments d'amortissement (21) sans mise en prise rigide avec les structures environnantes ;
**caractérisée en ce que**
le module intérieur (13) est un élément préassemblé qui est agencé d'un seul tenant dans l'espace de cabine de commande ;
l'espace de cabine de commande est doté d'une enveloppe de protection présentant au moins une partie pouvant être ouverte et fermée à travers laquelle le module intérieur est installé à sa place ;
le module intérieur (13) comprend un premier point d'accouplement (20) et l'espace de cabine de commande (35) comprend un second point d'accouplement (34) pour toutes les connexions des moyens électriques et de pression de la cabine de commande (10) ; et
le premier point d'accouplement (20) et le second point d'accouplement (34) sont agencés à proximité l'un de l'autre.
